# EUROPÄISCHE PATENTSCHRIFT

(11) **EP 2 535 167 B1**
(45) Veröffentlichungstag und Bekanntmachung des Hinweises auf die Patenterteilung: **10.01.2018**
(21) Anmeldenummer: 12172380.3
(22) Anmeldetag: 18.06.2012
(51) Int. Cl.: B29C 49/46, B29C 49/56, B29C 49/06, B29C 49/36, F16C 33/46, F16C 33/56, F16C 33/20

(54) **BLASFORMMASCHINE MIT GLEITLAGERGEFÜHRTEN SCHWENKWELLEN**
EXTRUSION DEVICE WITH SWIVEL SHAFTS GUIDED ON SLIDE BEARINGS
MACHINE DE FORMAGE PAR SOUFFLAGE AVEC ARBRE DE PIVOTEMENT GUIDÉ PAR PALIER LISSE

(30) Priorität: 16.06.2011 DE 102011106572
(43) Veröffentlichungstag der Anmeldung: 19.12.2012
(73) Patentinhaber: Krones AG, 93073 Neutraubling (DE)
(72) Erfinder: Voth, Klaus, 93073 Neutraubling (DE); Martini, Oliver, 93073 Neutraubling (DE); Geltinger, Florian, 93073 Neutraubling (DE); Lappe, Ulrich, 93073 Neutraubling (DE); Neubauer, Michael, 93073 Neutraubling (DE); Söllner, Jürgen, 903073 Neutraubling (DE); Winzinger, Frank, 93073 Neutraubling (DE); Hausladen, Josef, 93073 Neutraubling (DE)
(74) Vertreter: Bittner, Bernhard

(56) Entgegenhaltungen:
- EP-A1- 2 042 760
- WO-A1-97/25544
- WO-A2-2010/069808
- DE-A1-102008 060 759
- GB-A- 798 378
- GB-A- 2 235 736
- US-A- 5 558 448

## Beschreibung

Die vorliegende Erfindung bezieht sich auf eine Vorrichtung zum Umformen von Kunststoffvorformlingen zu Kunststoffbehältnissen. Derartige Vorrichtungen sind aus dem Stand der Technik bekannt. Dabei sind beispielsweise Streckblasmaschinen bekannt, in denen die Kunststoffvorformlinge durch Anlegen eines Innendrucks in einer Vielzahl von Blasstationen zu Kunststoffbehältnissen geblasen werden. Jede dieser Blasstationen weist üblicherweise zwei Formträgerteile auf, an denen die Blasformen bzw. Blasformteile befestigt sind. In diesen Blasformen wird ein erwärmter Kunststoffvorformling mithilfe von Druckluft aufgeblasen und zu einem Kunststoffbehältnis geformt.

Zum Entnehmen der hergestellten Behältnisse und zum Einbringen eines neuen Kunststoffvorformlings ist es erforderlich, dass die beiden Formträger eine Öffnungsbewegung ausführen. Üblicherweise wird dabei wenigstens eines der Formträgerteile um eine Achse geschwenkt, oder auch beide Formträger um eine gemeinsame Achse geschwenkt.

Aus dem Stand der Technik sind aber auch solche Blasmaschinen bekannt, bei denen die Blasstationen in Reinräumen geführt werden, um so einen aseptischen Blasvorgang zu ermöglichen. Die WO 2010/020529 A2 beschreibt eine derartige Blasformmaschine. Der Gegenstand der WO wird hiermit vollumfänglich auch zum Gegenstand der vorliegenden Anmeldung gemacht.

Weiterhin ist es aus dem Stand der Technik bekannt, dass während des Blasvorgangs die Blasformen verriegelt werden. Dabei ist es beispielsweise bekannt, dass ein an einem Blasformträgerteil schwenkbares Verriegelungselement in ein an dem anderen Blasformträgerteil angeordnetes Verriegelungselement eingreift und so während des Expansionsvorgangs, bei dem sehr hohe Drücke bzw. Kräfte auf die Blasformträger wirken, die Blasform sicher verriegelt ist.

Derzeit sind mehrere Arten von Lagern bekannt. So ist es beispielsweise bekannt, dass ein Lager, wie z. B. ein Nadellager über einen Schmiernippel und eine Verteilerleitung zyklisch nachgeschmiert wird. Dies führt jedoch zu einem möglichen Fettaustritt und einem höheren Wartungsaufwand, was insbesondere für die Anwendung in sterilen Blasmaschinen nicht geeignet ist.

Weiterhin sind aus dem Stand der Technik Hybridlager mit beispielsweise Keramik- und Stahlkomponenten bekannt, welche trocken laufen. Derartige Lager sind jedoch nur bei geringen Belastungen einsetzbar und verursachen aufgrund der Werkstoffe hohe Kosten.

Die Druckschrift WO 2010/069808 offenbart eine Vorrichtung gemäß dem Oberbegriff des Anspruchs 1.

Der vorliegenden Erfindung liegt daher die Aufgabe zugrunde, für derartige Blasformmaschinen zum Umformen von Kunststoffvorformlingen zu Kunststoffbehältnissen die Lagerung der beweglichen und insbesondere der schwenkbeweglichen Teile zu verbessern. Dies wird erfindungsgemäß durch eine Vorrichtung nach dem unabhängigen Anspruch 1 erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine Vielzahl von Blasstationen auf, welche an einem beweglichen Träger angeordnet sind. Dabei weisen die Blasstationen jeweils aus zwei Blasformteilen gebildete bzw. zwei Blasformteile aufweisende Blasformen auf, die in ihrem Inneren einen Hohlraum ausbilden, innerhalb dessen die Kunststoffvorformlinge expandierbar sind. Weiterhin weisen die Blasstationen jeweils Beaufschlagungseinrichtungen auf, welche die Kunststoffvorformlinge (insbesondere einen Innenraums derselben) zu deren Expansion mit einem fließfähigen Medium beaufschlagen, wobei die Blasformteile jeweils an Blasformträgern angeordnet sind und die Blasformträger bezüglich einander zum Öffnen und Schließen der Blasform bewegbar sind und die Blasstationen einen Verriegelungsmechanismus aufweisen, um die Blasformträger in einem geschlossenen Zustand miteinander zu verriegeln und dieser Verriegelungsmechanismus ein erstes Verriegelungselement aufweist, sowie ein zweites Verriegelungselement, welches gegenüber dem ersten Verriegelungselement bewegbar ist.

Erfindungsgemäß ist wenigstens eine erste Lagereinrichtung zur beweglichen Lagerung der Blasformträger gegenüber einander und/oder wenigstens eine zweite Lagereinrichtung zur beweglichen Lagerung wenigstens eines Verriegelungselements vorgesehen und wenigstens eine dieser Lagereinrichtung ist als schmiermittelloses Gleitlager ausgeführt oder als Lager, welches zwischen relativ zueinander beweglichen Lagerteilen wenigstens teilweise mit einem Kunststoff ausgespritzt ist.

Es wird daher erfindungsgemäß eine Verbesserung der Lagereinrichtungen vorgeschlagen. Bei einer erfindungsgemäßen Variante kommen als Lager Gleitlager zum Einsatz. Diese Gleitlager weisen eine hohe statische Belastbarkeit auf, welche für die hier vorliegende Anwendung von großer Bedeutung ist, da die größte Belastung auf diese Lager während des eigentlichen Blasvorgangs, d. h. in einem geschlossenen Zustand der Blasform auftritt. Während des Auftretens dieser hohen Belastungen wird das Lager selbst nicht bewegt.

Ein weiterer Vorteil in der Verwendung des Gleitlagers besteht in einem vergleichsweise geringen Bauraum und auch darin, dass ein Trockenlauf möglich ist. Weiterhin ist es möglich, dass die jeweiligen Gleitlagerwertstoffe lebensmittelrechtlich beispielsweise seitens der FDA (Federal Drug Administration) zugelassen werden können. Daneben bieten diese Lager auch die Vorteile, dass die Vorrichtung sehr gut reinig- und sterilisierbar ist.

In einer vorteilhaften Ausführungsform weist die Vorrichtung einen Reinraum auf, innerhalb dessen die Blasstationen transportiert werden und dieser Reinraum ist mit wenigstens einer Wandung gegenüber der Umgebung abgetrennt. So wäre es möglich, dass die gesamte Vorrichtung sich innerhalb des besagten Reinraums befindet. Bevorzugt ist dieser Reinraum jedoch derart ausgestaltet, dass er den Transportpfad der einzelnen Blasstationen kanalartig umgibt.

Vorteilhaft handelt es sich bei den beweglichen Träger um ein Blasrad, welches sich um eine vorgegebene Drehachse dreht und an dem eine Vielzahl von den besagten Blasstationen angeordnet ist.

Bei einer vorteilhaften Ausführungsform weist dabei der Reinraum mehrere Wandungen zur Abtrennung des Reinraums gegenüber einer Umgebung auf. Dabei sind vorteilhaft wenigstens zwei Wandungen gegenüber einander beweglich angeordnet. Bei einer weiteren vorteilhaften Ausführungsform wäre es auch möglich, dass eine oder mehrere Wandungen durch die Transporteinrichtung bzw. den beweglichen Träger selbst ausgebildet werden. Dabei ist es möglich, dass eine Dichtungseinrichtung verwendet wird, um gegeneinander bzw. bezüglich einander bewegliche Wandungen gegenseitig abzudichten. Als Dichtungseinrichtungen kommt dabei beispielsweise ein sogenanntes Wasserschloss zum Einsatz.

Bei einer weiteren vorteilhaften Ausführungsform ist wenigstens ein Blasformträger bezüglich einer vorgegebenen Schwenkachse schwenkbar und die erste Lagereinrichtung dient zum Lagern dieser Schwenkbewegung. Bei dieser Schwenkwelle kann es sich beispielsweise um eine Hauptwelle der Vorrichtung handeln.

Bei einer weiteren vorteilhaften Ausführungsform ist wenigstens ein Verriegelungselement bezüglich einer zweiten Schwenkachse schwenkbar gelagert und die zweite Lagerungseinrichtung dient zum Lagern dieser Schwenkbewegung bezüglich der zweiten Schwenkachse. So ist möglich, dass ein Verriegelungselement beispielsweise schwenkbar an einem Blasformträgerteil angeordnet ist und zur Lagerung dieser Schwenkbewegung die besagte Lagereinrichtung dient.

Es wäre dabei möglich, dass die Gleitlager jeweils eine glatte Innenfläche aufweisen, um die Reinigung und Sterilisation zu vereinfachen. Es wäre jedoch auch möglich, dass wenigstens eine Lagerung an wenigstens einer Lagerfläche eine Ausnehmung oder allgemein eine Unebenheit aufweist. Derartige Ausnehmungen bzw. Unebenheiten, die beispielsweise als Nuten oder Aussparungen ausgestaltet sein können, können sich beispielsweise an einer Innen- und oder Außenfläche des Lagers befinden. Durch diese Nuten kann beispielsweise die Reinigung und Sterilisation der Lagereinrichtung vereinfacht werden, da ein Sterilisationsmittel durch diese Nuten hindurchfließen kann.

Bei einer weiteren vorteilhaften Ausführungsform weist wenigstens eine Lagereinrichtung einen Kunststoff als Gleitlagerwerkstoff auf. Auch wäre es möglich, dass wenigstens ein Werkstoff wenigstens einer Lagereinrichtung aus einer Gruppe von Kunststoffen ausgewählt ist, welche thermoplastische Kunststoffe, duroplastische Kunststoffe, metallische Werkstoffe, Kombinationen hieraus oder dergleichen enthält.

Es wäre auch möglich, dass mehrere Lagereinrichtungen der Vorrichtung, wie beispielsweise sowohl die Lagerung für die Schwenkbewegung der Blasformträger, als auch die Lagerung für das Verriegelungselement in der oben bezeichneten Weise ausgeführt sind.

Bei einer weiteren vorteilhaften Ausführungsform ist in wenigstens einem Kunststoff welcher als Werkstoff für wenigstens eine Lagereinrichtung dient ein Schmierstoff für die Lagereinrichtung enthalten. So wäre es beispielsweise möglich, dass ein Lager eingesetzt wird, bei dem die Hohlräume, die üblicherweise mit Fett gefüllt sind, mit einem auf Kunststoff basierenden Material ausgespritzt werden. Dies kann beispielsweise durch einen Spritzvorgang erfolgen. Vorteilhaft handelt es sich bei dem dabei verwendeten Kunststoff um ein Thermoplast. In diesem Thermoplast kann ein überwiegender Anteil des Schmierstoffs enthalten sein. Dies führt dazu, dass das thermoplastische Material als Schwamm wirkt, der über die Zeit kontinuierlich den Schmierstoff abgibt.

Bei dieser Ausführungsform wäre es möglich, dass im Prinzip beliebige Wälzlager verwendet werden und dann in einem Verfahren, wie beispielsweise dem Spritzgussverfahren mit dem schmierstoffgetränkten Thermoplast ausgespritzt werden. Der Vorteil dieser Anwendung besteht in den niedrigen Kosten und der unveränderten Größe des verwendeten Bauraums. Weiterhin ist eine vorteilhafte Schmierung möglich, da der oben erwähnte "Schwamm" eventuelle Wälzkörper des Lagers fast vollständig umschließt. Auch diese Ausführungsform der Lagereinrichtung eignet sich insbesondere auch für sterile oder aseptische Anwendungen.

Bei einer weiteren vorteilhaften Ausführungsform dient wenigstens eine Lagereinrichtung als Radiallager und/oder als Axiallager. Dabei ist es bevorzugt möglich, dass das Lager sowohl Kräfte in axialer als auch in radialer Richtung aufnehmen kann. So kann das Lager beispielsweise auch in der Art einer Bundbuchse ausgebildet sein.

Bei einer weiteren vorteilhaften Ausführungsform kann das Gleitlager auch aus zwei oder mehreren Werkstoffen bestehen, die beispielsweise miteinander verklebt, gesintert, aufgespritzt oder dergleichen sind. Es wäre jedoch auch möglich, dass das Gleitlager bzw. die Lagereinrichtung aus nur einem einzigen Werkstoff besteht.

Bei einer weiteren vorteilhaften Ausführungsform ist die Lagereinrichtung von einem fließfähigen Sterilisationsmittel durchströmbar. Diese Anwendung ist insbesondere für aseptische Anwendungen interessant. Dabei wäre es möglich, dass das Sterilisationsmittel beispielsweise durch die oben erwähnten Nuten bzw. Ausnehmungen strömt.

Weitere Vorteile und Ausführungsformen ergeben sich aus den beigefügten Zeichnungen: Darin zeigen:
- Fig. 1: eine schematische Darstellung einer Anlage zum Herstellen von Kunststoffbe-hältnissen;
- Fig. 2: eine Ansicht eines Reinraums im Bereich einer Blasstation;
- Fig. 3: eine perspektivische Darstellung einer Blasstation;
- Fig. 4: eine Lagereinrichtung nach dem Stand der Technik;
- Fig. 5: eine erfindungsgemäße Blasstation;
- Fig. 6a - d: vier Ausgestaltungen eines Lagerkörpers;
- Fig. 7: eine weitere Ausgestaltung einer erfindungsgemäßen Lagereinrichtung;
- Fig. 8: eine Ansicht zur Veranschaulichung einer Schwenkbewegung; und
- Fig. 9: eine weitere Ausführungsform einer Blasstation mit Reinigungsmöglichkeit.

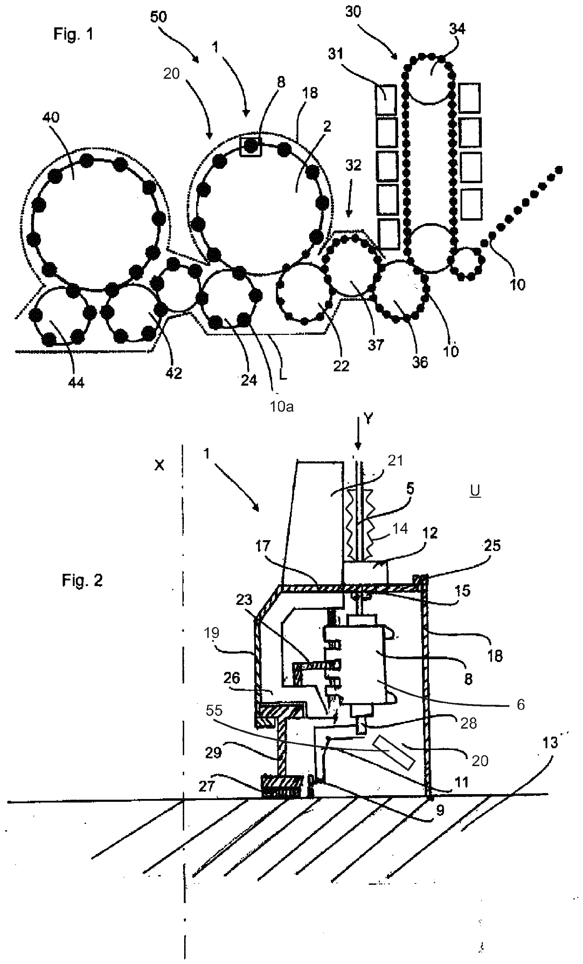

Figur 1 zeigt eine schematische Darstellung einer Anlage zum Herstellen von Kunststoffbehältnissen nach dem Stand der Technik. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch durch elektromagnetische Strahlung möglich. Insbesondere wird in diesem Bereich eine Innensterilisation der Vorformlinge durchgeführt.

Das Bezugszeichen 20 bezeichnet in seiner Gesamtheit einen Reinraum, dessen Außenbegrenzungen hier durch die punktierte Linie L angedeutet sind. In einer weiteren bevorzugten Ausführungsform ist der Reinraum 20 nicht nur im Bereich des Transportrads 2 und Befüllungseinrichtung 40 angeordnet, sondern beginnt möglicherweise schon im Bereich der Heizeinrichtung 30, der Sterilisationseinrichtung 32, der Kunststoffvorformlingzuführung und/oder der Kunststoffvorformlingherstellung. Man erkennt, dass dieser Reinraum 20 in dem Bereich der Sterilisationseinheit 32 beginnt. In diesem Bereich können Schleusenein-richtungen vorgesehen sein, um die Kunststoffvorformlinge in den Reinraum 20 einzuführen, ohne dass dabei zu viel Gas innerhalb des Reinraums strömt und so verloren geht.

Der Reinraum ist, wie durch die gestrichelte Linie L angedeutet, an die Außengestalt der einzelnen Anlagenkomponenten angepasst. Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen bzw. Umformungsstationen 8 angeordnet ist, wobei hier lediglich einer dieser Blasstationen 8 dargestellt ist. Mit diesen Blasstationen 8 werden die Kunststoffvorformlinge 10 zu Behältnissen 10a expandiert. Obwohl hier nicht detailliert gezeigt, befindet sich nicht der gesamte Bereich des Transporteinrichtung 2 innerhalb des Reinraums 20, sondern der Reinraum 20 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 20 von der Umformungsvorrichtung 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 10a von der Umformungsvorrichtung 1 erreicht werden.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 20. Auch im Falle der Befüllungseinrichtung wäre es möglich, dass nicht die gesamte Befüllungseinrichtung 40 mit beispielsweise einem Reservoir für ein Getränk vollständig innerhalb des Reinraums 6 angeordnet sind, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 20 im Bereich der Vorrichtung 1 auf einen geringst möglichen Bereich reduziert, nämlich im Wesentlichen auf die Blasstationen 8 selbst. Durch diese kleinbauende Gestaltung des Reinraums 20 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 im Bereich einer Blasstation 8. Eine Vielzahl derartiger Blasstationen 8 wird mit einer Transporteinrichtung 2 bzw. einem Träger drehend um eine Achse X bewegt. Die Blasstation 8 ist, wie in Figur 2 ersichtlich, innerhalb des Reinraums 20, der hier kanalartig ausgebildet ist, geführt. Dieser Reinraum 20 wird abgeschlossen durch eine bewegliche Seitenwand 19 und einen einteilig mit dieser Seitenwand 19 ausgebildeten Deckel 17. Diese Seitenwand 19 und der Deckel 17 drehen dabei mit der Blasstation 8 mit.

Das Bezugszeichen 18 bezieht sich auf eine weitere Wandung, welche den Reinraum 6 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 20 und hier unmittelbar an der Wandung 19 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 6 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 20 angeordnet. Es wäre jedoch beispielsweise auch möglich, etwa bereits einen Abschnitt 11 unterhalb der einzelnen Blasstationen 8 aus dem Reinraum 20 herauszuführen.

Die Transporteinrichtung 2 kann noch weitere Elemente aufweisen, welche oberhalb des Reinraums 20 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 21 bezieht sich auf eine weitere Halterung für diesen Schlitten 12 der Reckstange 5.

Man erkennt, dass bestimmte Bereiche der Reckstange während des Blasvorgangs sowohl außerhalb des Reinraums 20 als auch innerhalb des Reinraums 20 sind. Zu diesem Zweck ist es möglich, außerhalb des Reinraums 20 bzw. oberhalb des Schlittens 12 eine Schutzeinrichtung wie einen Faltenbalg vorzusehen, der die Reckstange 5 umgibt, so dass kein Bereich der Reckstange 5 unmittelbar mit der Außenumgebung in Berührung kommt. Das Bezugszeichen U kennzeichnet die (unsterile) Umgebung des Reinraums 20. Das Bezugszeichen 28 kennzeichnet einen Träger zum Tragen einer Bodenform, welche ebenfalls einen Bestandteil der Blasform 4 ausbildet. Dieser Träger ist dabei ebenfalls in der Richtung Y bewegbar.

Das Bezugszeichen 55 bezieht sich auf eine Sterilisationseinrichtung, welche hier bevorzugt im Inneren des Reinraums 20 angeordnet ist und zum Sterilisieren der einzelnen Umformungsstationen bzw. Bestandteilen dieser Umformungsstationen 8 dient. Diese Sterilisationseinrichtung 55 kann dabei die Umformungsstationen 8 beispielsweise mit Wasserstoffperoxid oder einem anderen Sterilisationsmittel beaufschlagen. Dabei kann die Sterilisationseinrichtung 55 stationär angeordnet sein und die Umformungsstationen können sich gegenüber dieser Sterilisationseinrichtung 55 bewegen. Diese Sterilisationseinrichtung bzw. Beaufschlagungseinrichtung 55 kann sich am Transportrad 2 oder an der stehenden Wandung 18 befinden oder generell stationär angeordnet sein und aus Düsen o ähnlichem bestehen. Zudem ist es vorteilhaft, Sterilluft zum Sterilisieren des Reinraums 20 über das Lüftungssystem in den Reinraum 20 einzubringen.

Die (nicht gezeigten) Blasformen sind innerhalb der Blasformträger 6 angeordnet. Genauer können dabei zwei Blasformträgerteile angeordnet sein, die gegenüber einander schwenkbar sind und jeweils ein Blasformteil halten. Durch diesen Schwenkvorgang können die Blasformen zum Einbringen von Kunststoffvorformlingen und zum Entnehmen fertig geblasener Behältnisse geöffnet werden. Diese Blasformträger und Blasformen sind dabei ebenfalls innerhalb des Reinraums angeordnet.

Es wäre jedoch auch (anders als in Fig. 2 gezeigt) möglich und bevorzugt, dass die Transporteinrichtung 2 bzw. der Träger einen C-förmigen Außenumfang aufweist, der auch teilweise die Außenwandungen des Reinraums ausbildet. Damit dreht sich hier diese C - förmige Reinraumwand mit der Transporteinrichtung 2 d.h. dem Blasrad. Bei dieser Ausführungsform ist die untere Begrenzung des Reinraums von dem Boden 13 beabstandet und bewegt sich relativ zu dem Boden. Auf diese Weise kann der Reinraum noch kleiner gestaltet werden als in Fig.2 gezeigt. Eine Abdichtung dieses C- förmigen Profils der Transporteinrichtung, welches hier sowohl eine Innenwandung als auch eine untere und obere Abdeckung des Reinraums ausbildet, findet hier bevorzugt nur gegenüber der Außenwandung des Reinraums statt. Diese Außenwandung ist dabei vorteilhaft stationär angeordnet.

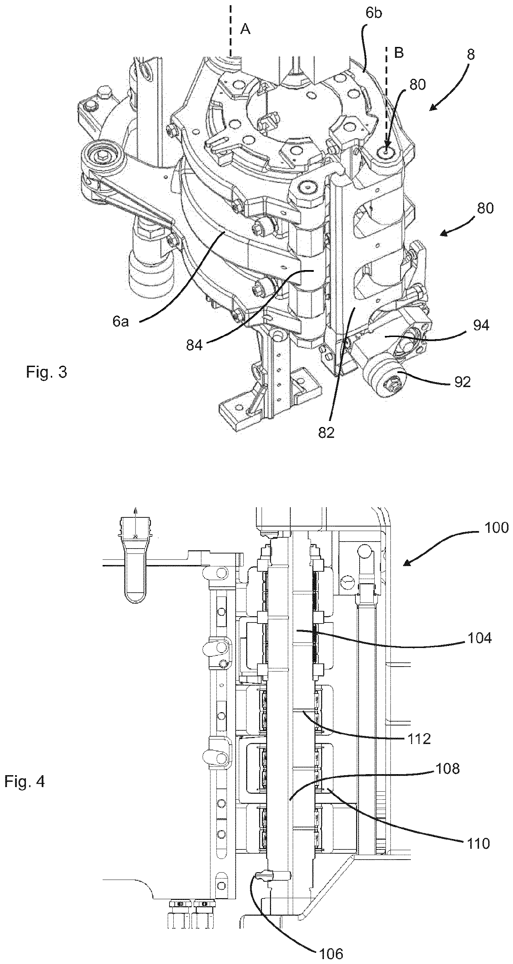

Fig. 3 zeigt eine perspektivische Darstellung einer Blasstation 8. Diese weist zwei Blasformträgerteile 6a und 6b auf, die gegeneinander bzw. bezüglich einander um eine Schwenkachse A schwenkbar sind, um die Blasform zu öffnen und zu schließen.

Das Bezugszeichen 80 kennzeichnet in seiner Gesamtheit einen Verriegelungsmechanismus, der zum Verriegeln der Blasformhälften während einer Expansion der Kunststoffvorformlinge dient. Dieser Verriegelungsmechanismus 80 weist dabei ein erstes Verriegelungselement 82 sowie ein zweites Verriegelungselement 84 auf. Dieses erste Verriegelungselement 82 ist dabei mittels einer hier nicht im Detail gezeigten ersten Lagereinrichtung schwenkbar an dem zweiten Formträgerteil 66 angeordnet. Zum Verriegeln greifen entsprechende Vorsprünge des ersten Verriegelungselements 82 in Ausnehmungen des zweiten Verriegelungselements 84 ein. Dieses zweite Verriegelungselement 84 ist dabei drehfest an dem ersten Formträgerteil 6a angeordnet. Das Bezugszeichen 92 bezieht sich auf eine Kurvenrolle, die an einem Schwenkhebel 94 angeordnet ist und die dazu dient, um eine Schwenkbewegung des ersten Verriegelungselements 82 zu erreichen. Die beiden Formträgerteile 6a und 6b sind bezüglich einer geometrischen Schwenkachse A schwenkbar angeordnet, wobei auch hierzu entsprechende Lagereinrichtungen vorgesehen sind.

Fig. 4 kennzeichnet eine Lagereinrichtung nach dem Stand der Technik. Dabei ist hier eine Hauptwelle 104 vorgesehen, der über einen Schmiernippel 106 ein Schmiermittel zugeführt werden kann. Dieses Schmiermittel gelangt über einen Kanal 108 und eine Vielzahl von Nebenkanälen 112 zu den jeweiligen Lagerstellen 110. In diesen Fällen kann es jedoch zu Fettaustritt kommen, was insbesondere bei aseptischen Anwendungen unerwünscht ist.

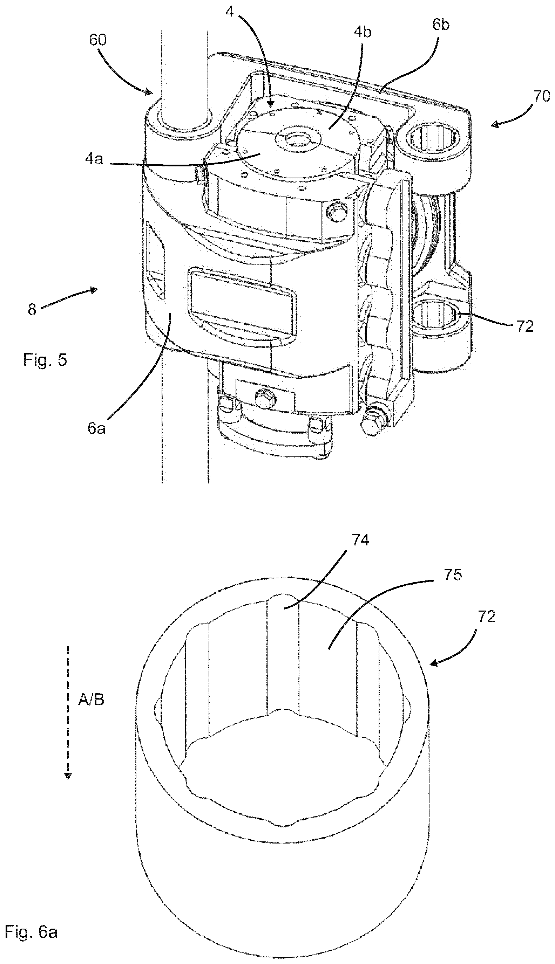

Fig. 5 zeigt eine erfindungsgemäße Blasstation. Dabei sind wiederum die beiden Formträger 6a, 6b erkennbar sowie hier auch die von diesen aufgenommenen Blasformteile 4a, 4b, die gemeinsam die Blasform 4 bilden. Das Bezugszeichen 60 kennzeichnet eine erste Lagereinrichtung zur beweglichen Lagerung der Blasformteile 6a, 6b. Das Bezugszeichen 70 kennzeichnet eine zweite Lagereinrichtung zum Lagern eines (nicht dargestellten) Verriegelungselements. Das Bezugszeichen 72 kennzeichnet einen Lagerkörper, der im Detail genauer geschrieben wird.

Fig. 6a zeigt eine mögliche Ausgestaltung eines derartigen Lagerkörpers 72. Dieser Lagerkörper weist bei dieser Ausgestaltung eine Vielzahl von Nuten 74 auf, welche jeweils an der Innenwandung 75 des Lagerkörpers 72 angeordnet sind. Die gegenüber diesem Lagerkörper 72 zu lagernde Welle befindet sich innerhalb des Lagerkörpers 72. Die Nuten 74 verlaufen hier senkrecht, d. h. auch entlang der geometrischen Achse A bzw. B, bezüglich der die Schwenkung des Verriegelungselements durchgeführt wird. Die Ausnehmungen 74 sind hier als runde Ausnehmungen ausgestaltet. Auf diese Weise kann der Anlagerung von Schmutz entgegengetreten werden. Auch ist auf diese Weise eine Sterilisierung entlang der Achse A bzw. B möglich, d. h. das Sterilisationsmittel kann mithilfe dieser Ausnehmung auch durch die Lagereinrichtung 70 bzw. das Lagerelement 72 hindurchtreten.

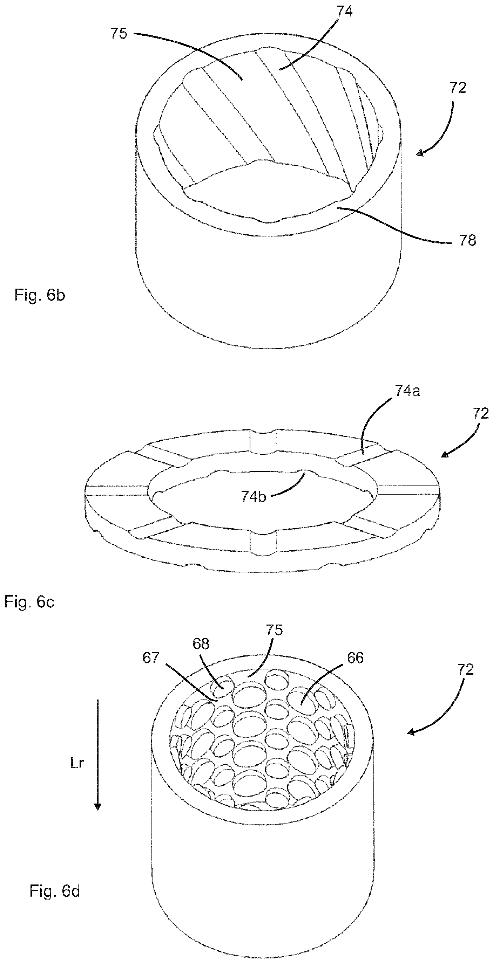

Fig. 6b zeigt eine weitere Ausgestaltung für ein Lagerelement 72. Auch hier handelt es sich, wie bei der in Fig. 6a gezeigten Ausgestaltung um ein Axiallager. Auch hier sind wiederum Nuten 74 vorgesehen, wobei diese nicht in der Längsrichtung verlaufen, sondern schräg. Auch auf diese Weise ist eine Durchleitung eines Sterilisationsmittels möglich. Das Bezugszeichen 78 kennzeichnet wiederum eine Wandung des Lagerelements 72.

Fig. 6c zeigt eine weitere Ausgestaltung eines Lagerelements, wobei auch hier Nuten 74a, 74b vorgesehen sind, die hier an dem jeweiligen oberen und unteren Flächen des Lagerelements 72 angeordnet sind. Auch diese Kanäle erlauben ein Durchführen von Reinigungsmitteln.

Fig. 6d zeigt eine weitere Darstellung eines Lagerelements 72. Auch bei diesem Lagerelement ist hier keine glatte Innenoberfläche 75 vorgesehen, sondern eine Vielzahl von ersten Vorsprüngen 66 und zweiten Vorsprüngen 68 die alle jeweils radial nach innen ragen. Auch zwischen diesen einzelnen Vorsprüngen 66 und 88 werden Kanäle 67 gebildet, durch welche auch ein Sterilisationsmedium fließen kann. Dabei ist hier eine erste Reihe der Vorsprünge 66 ausgebildet und sowohl in Umfangsrichtung als auch in der Längsrichtung Lr dagegen versetzt eine zweite Reihe von zweiten Vorsprüngen 68. Auch auf diese Weise wird ein sehr vorteilhaftes Design des Lagerkörpers 72 erreicht.

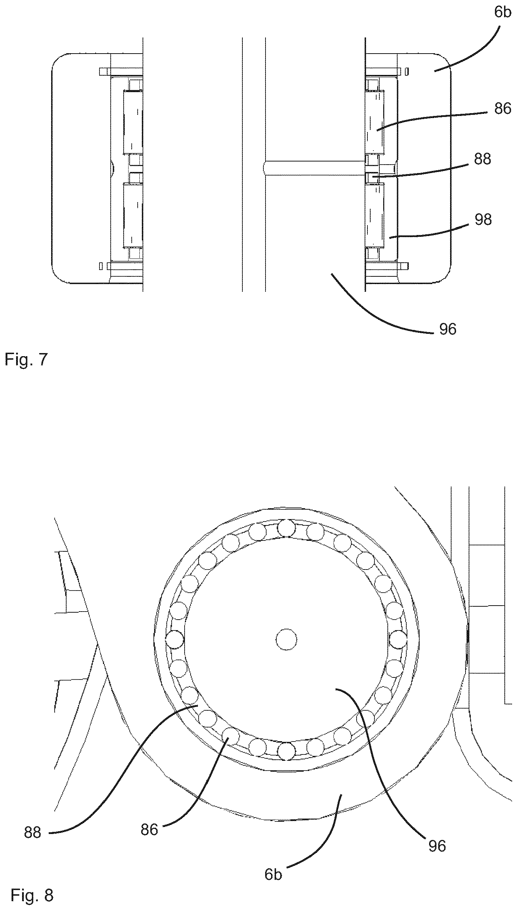

Fig. 7 zeigt eine weitere Ausgestaltung einer erfindungsgemäßen Lagereinrichtung. Dabei ist auch hier wieder eine Schwenkwelle 82 vorgesehen, der gegenüber ein Formträgerteil 6b schwenkbar angeordnet ist. Bei dieser Anordnung weist die Lagereinrichtung Wälzkörper 86, wie beispielsweise Nadeln auf, die die drehende Lagerung des Formträgerteils 6b gegenüber der Welle 82 bewirken. Das Bezugszeichen 88 kennzeichnet schematisch einen eingespritzten Kunststoff, in dem diese Wälzlager eingebettet sind. Dieser Kunststoff 88 enthält dabei bereits einen wesentlichen Anteil des Schmierstoffes, sodass die Drehbewegung der Wälzkörper 86 auf diese Weise geschmiert ist. Das Bezugszeichen 98 kennzeichnet einen Au-βenring der Lagereinrichtung, der sich, wie erwähnt, gegenüber der Welle 96 dreht.

So wäre es beispielsweise möglich, dass es sich bei dem Kunststoff um eine schmiermittelenthaltende thermoplastische Kunstharzmasse handelt, welche beispielsweise zwischen 2 und 40 Volumenprozent eines Schmieröls oder eines Öligkeitsverbesserers enthalten kann. Diese Kunstharzmasse kann dabei zusätzlich Komponenten enthalten, wie einen Flammhemmer, ein Antistatikmittel, ein Antioxidationsmittel oder auch antibakterille Mittel, wie z.B. Silberionen. Vorzugsweise enthält die Kunststoffmasse mit zwischen 5 und 25 Prozent seiner Gesamtmasse bzw. seines Gesamtvolumens das Schmiermittel.

So wäre es möglich, dass als Trägersubstanz des Materials PE oder ein Thermoplast verwendet wird, in den ein Schmiermittel bzw. Fett eingelagert ist. Dabei wäre es denkbar, dass der Anteil des Trägers bei zwischen 20% und 40% und bevorzugt bei ca. 30% liegt und der Anteil des Schmiermittels entsprechend bei zwischen 60% und 80% und bevorzugt bei ca. 70%. Bevorzugt werden daher Wälzlager verwendet, bei denen die Zwischenräume mit einem Material aufgefüllt sind, das die Schmierung nur an den Körper, also das Wälzlager selbst abgibt.

Fig. 8 zeigt eine weitere Ansicht zur Veranschaulichung der Schwenkbewegung des Formträgerteils 6b. Man erkennt hier wiederum eine Vielzahl von Wälzkörpern, die in den eingespritzten Kunststoff 88 eingebettet sind. Auf diese Weise erhält eine derart ausgestaltete Lagereinrichtung im Wesentlichen über ihre gesamte Lebensdauer hinweg ihre Lagereigenschaften.

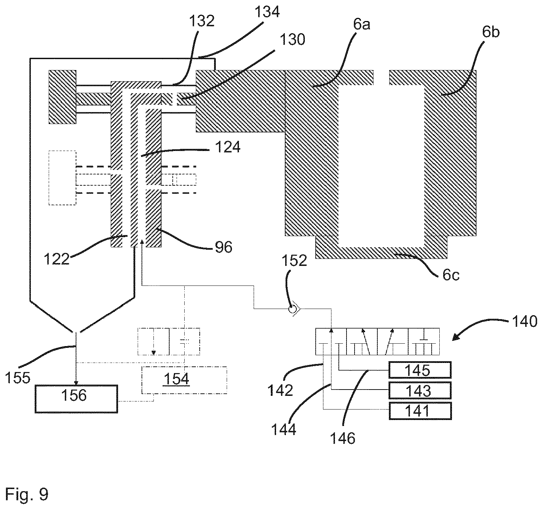

Fig. 9 zeigt eine weitere Ausführungsform einer Blasstation und hier insbesondere Möglichkeiten für eine Reinigung der Welle 96. Es wird darauf hingewiesen, dass diese Ausgestaltung auch bei herkömmlichen Blasstationen Anwendung finden kann, also insbesondere bei Blasstationen nach dem Oberbegriff von Anspruch 1 (mit oder auch ohne Verriegelungsmechanismus). Insbesondere sind die in Fig. 9 gezeigten Merkmale auch mit herkömmlichen Lagereinrichtungen kombienierbar.

Die Anmelderin behält sich vor, auf derartige Ausgestaltungen separat Patentschutz zu beanspruchen.

Bei der in Fig. 9 gezeigten Ausführungsform sind im Inneren der Welle Kanäle 122, 124 ausgebildet, durch welche ein oder mehrere (flüssige und/oder gasförmige) Reinigungs- oder sterilisationsmedien strömen können. Das Bezugszeichen 140 kennzeichnet eine Ventileinrichtung, hier ein Mehrwegeventil, über das der Welle wenigstens ein Reinigungsmittel und bevorzugt mehrere Reinigungsmittel zugeführt werden können. Genauer kann der Welle ausgehend von einem ersten Reservoir 145 über eine Zuleitung 146 ein Schaumreinigungsmittel zugeführt werden, ausgehend von einem zweiten Reservoir 143 über eine Zuleitung 144 ein Sterilisationsmittel, wie beispielsweise Peressigsäure oder Wasserstoffperoxid und ausgehend von einem dritten Reservoir 141 über eine Zuleitung 142 Druckluft zum Ausblasen und Trocknen zugeführt werden. Vorteilhaft weist also die Vorrichtung eine Ventileinrichtung 140 auf, über welche die Zufuhr von wenigstens einem Reinigungsmittel bzw. Sterilisationsmittel in die Welle 96 und/oder die Lagereinrichtung, vorteilhaft die Zufuhr von wenigstens zwei Reinigungs- oder Sterilisationsmitteln und besonders bevorzugt die Zufuhr von drei Reinigungs- oder Sterilisationsmitteln in die Lagereinrichtung gesteuert werden kann. Die Wahl des Reinigungs- oder Sterilisationsmittels wird bevorzugt so getroffen, dass der Lagerwerkstoff möglichst wenig beschädigt wird.

Das Bezugszeichen 152 kennzeichnet ein weiteres Ventilelement, welches hier als Rückschlagventil ausgebildet ist und welches verhindert, dass Substanzen wieder zurück in die Reservoirs 141, 143 und/oder 145 gelangen können.

Das jeweilige Reinigungs- oder Sterilisationsmittel kann so in einen im Inneren der Welle 96 ausgebildeten ersten Kanal 124 geleitet werden und kann bis an eine Gleitlagerbuchse 130 der Lagereinrichtung 60 herangeführt werden. Ein zweiter in der Welle 96 ausgebildeter Kanal dient zum Rückführen des Reinigungs- oder Sterilisationsmediums. Genauer gesagt kann das Reinigungs- oder Sterilisationsmedium über eine Ableitung 155 in einen Sammelbehälter 156 abgeführt werden. Das Bezugszeichen 154 bezieht sich auf eine optional vorsehbare Vakuumpumpe, mit der das Reinigungsmittel bzw. Reste des Reinigungs- oder Sterilisationsmittels aus der Zuleitung bzw. aus der Ableitung abgeführt werden können. Ebenfalls ist eine Rückführung in die entsprechenden Reservoire und an eine Wiederverwendung des Reinigungs- oder Sterilisationsmittels möglich.

Es wäre weiterhin auch möglich, dass der Lagereinrichtung 60 bzw. der Welle, wie im Stand der Technik an sich bekannt, ein Schmiermittel bzw. Fett zugeführt wird. Vorteilhaft werden in diesem Falle die gleichen Kanäle, welche zum Zuführen des Reinigungsmittels dienen, auch zum Zuführen des Schmiermittels genutzt. Über die Ventileinrichtung 140 kann dann der Lagereinrichtung zeitweise (insbesondere im Arbeitsbetrieb) ein Schmiermittel und zeitweise (insbesondere in einem Reinigungsbetrieb) ein Reinigungsmittel zugeführt werden.

Die Bezugszeichen 132, 134 beziehen sich auf optionale Dichtungseinrichtungen, welche die Lagereinrichtung bzw. die Welle 96 gegenüber dem Reinraum abgrenzen. Bei der in Fig. 9 gezeigten bevorzugten Ausführungsform ist also vorteilhaft mindestens eine Dichtungseinrichtung vorgesehen, welche einem Öffnungsmechanismus des Blasformträgers zugeordnet ist und welche diesen Öffnungsmechanismus von einem Transportweg der Behältnisse abschirmt. Weiterhin wäre es vorteilhaft auch möglich, dass bei der in Fig. 9 gezeigten Ausführungsform oder bei einer der anderen Ausführungsformen eine Dichtungseinrichtung zu einem unsterilen Raum an wenigstens einer der die Blasform abschließenden Komponenten (wie insbesondere aber nicht ausschließlich der Beaufschlagungseinrichtung bzw. Blasdüse, der Blasform oder dem Blasformboden) vorhanden ist.

Daneben wäre es auch denkbar, dass eine Dichtungseinrichtung zwischen einer Antriebseinrichtung von Komponenten wie der Blasdüse, der Reckstange, dem Formträger, einer Verriegelung, und/oder einem Boden (welche Antriebseinrichtung außerhalb des Reinraums angeordnet ist) und dem Reinraum mit den einzelnen Blasformen vorgesehen ist.

Für diese Dichtungseinrichtung wären dabei unterschiedliche Ausführungsformen denkbar.

So könnte diese Dichtungseinrichtung als Faltenbalg ausgeführt sein. Dieser Faltenbalg könnte dabei ein Material aufweisen bzw. aus einem Material hergestellt sein, welches elastischen Kunststoff wie, EPDM, Teflon, Kautschuk, Elastomere, Gummi oder Stahl, Membranbalg oder Wellbalg oder Kombinationen hieraus enthält.

Auch wäre es denkbar, dass die Dichtungseinrichtung die Blasformträger zweier benachbarter Blasstationen berührt. So könnte die Dichtungseinrichtung bei Metallen evtl. verschweißt sein. Auch wäre es möglich, dass die Dichtungseinrichtung bzw. der Faltenbalg teilweise zwischen den Blasformträgerhälften einer Blasstation angeordnet ist.

Auch wäre es möglich, dass die Dichtungseinrichtung durch eine Drehachse zweier Formträgerhälften verläuft. Dabei wäre es auch möglich, dass zwei ineinander drehende Wellen zur Bewegung der Blasformträgerhälften eingesetzt werden.

Der Verriegelungsmechanismus für die Blasformträgerteile kann dabei auch als Topfverriegelung gestaltet sein, welche beispielsweise von unten oder von oben an die Blasformträgerteile herangeführt wird. Auch wäre es denkbar, dass eine derartige Topfverriegelung von oben und eine zweite derartige Topfverriegelung von unten an die Blasformträgerteile herangeführt wird. Diese Topfverriegelung kann dabei beispielsweise ein das Bodenteil der Blasform oder ein die Blasdüse (bzw. Beaufschlagungseinrichtung) haltendendes Trägerelement sein, kann aber auch unabhängig von der Bodenform bzw. der Beaufschlagungseinrichtung ausgeführt sein.

Vorteilhaft sind die Blasformträger aus Edelstahl gefertigt und weisen besonders bevorzugt glatte Oberflächen auf. Weiterhin kann auch eine Kunststoffzentrierung für die Blasformhälften vorgesehen sein.

Die in Fig. 9 gezeigte Reinigung für die Welle 96 kann auch in entsprechender Weise für die Anlenkhebel der Blasform vorgesehen sein. Anstelle der oben beschriebenen Lagereinrichtungen können, insbesondere bei der in Fig. 9 gezeigten Ausführungsform auch Lagereinrichtungen wie Edelstahlwälzlager, Keramikwälzlager und/oder Kunststoffgleitlager zum Einsatz kommen. Die Antriebseinrichtungen zum Bewegen der Beaufschlagungseinrichtung, der Reckstange, der Blasformträger, der Verriegelung und/oder des Bodenteils können auch teilweise oder vollständig als elektrische und/oder magnetische Antriebseinrichtungen ausgeführt sein. Vorteilhaft ist wenigstens eine dieser Antriebseinrichtungen außerhalb des Reinraums angeordnet. Auch könnten beliebige Kombinationen der genannten Antriebseinrichtungen außerhalb des Reinraums angeordnet sein. Daneben wäre auch eine elektrische oder magnetische Öffnung der Verriegelung denkbar.

Die in Fig. 9 gezeigte Ausführungsform kann jedoch auch bei nicht aseptischen Anwendungen, ohne Reinraum, betrieben werden. Auch wäre es möglich, dass die Formträgerwelle nicht, wie in Fig. 9 gezeigt außerhalb des Reinraums angeordnet ist, sondern (zumindest teilweise) innerhalb des Reinraums. Auch die entsprechenden Lagereinrichtungen könnten innerhalb des Reinraums angeordnet sein.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Umformungseinrichtung, Vorrichtung
- 2: Transportrad, Transporteinrichtung
- 4: Lagereinrichtung, Blasform
- 4a, 4b: Blasformteile
- 5: Reckstange
- 6: Reinraum
- 6a, 6b: Blasformträgerteile
- 8: Blasstation, Umformungsstationen
- 9: Führungskurve
- 10a: Behältnisse
- 10: Kunststoffvorformlinge
- 11: Folgeeinrichtung, Abschnitt
- 12: Schlitten
- 13: Boden
- 17: Deckel
- 18: Wandung
- 19: Seitenwand
- 20: Reinraum
- 21: weitere Halterung
- 22: Zuführeinrichtung
- 23: Halteeinrichtung
- 24: Abführeinrichtung
- 25: Dichtungseinrichtung
- 26: Träger
- 27: weitere Dichtungseinrichtung
- 28: Träger
- 29: Haltekörper
- 30: Heizeinrichtung
- 31: Heizelemente
- 32: Sterilisationseinrichtung
- 34: Transporteinrichtung
- 36: Übergabeeinheit
- 37: Transportrad
- 40: Befüllungseinrichtung
- 42: Übergabeeinheit
- 44: Transporteinheit
- 50: Anlage
- 55: Sterilisationseinrichtung
- 60: erste Lagereinrichtung
- 66,68: Vorsprung
- 67: Kanäle
- 70: zweite Lagereinrichtung
- 72: Lagerkörper, Lagerelement
- 74: Nut, Ausnehmung
- 74a, 74b: Nuten
- 75: Innenoberfläche
- 78: Wandung
- 80: Verriegelungsmechanismus
- 82: erstes Verriegelungselement,
- 84: zweites Verriegelungselement
- 86: Wälzkörper
- 88: Vorsprung, eingespritzter Kunststoff
- 92: Kurvenrolle
- 94: Schwenkhebel
- 96: Welle
- 98: Außenring
- 100: Vorrichtung (Stand der Technik)
- 104: Hauptwelle
- 106: Schmiermittel
- 108: Kanal
- 110: Lagerstelle
- 112: Nebenkanal
- 122, 124: Kanäle in Welle 96
- 130: Gleitlagerbuchse
- 132, 134: Dichtungseinrichtung
- 140: Ventileinrichtung
- 141, 143, 145: Reservoir
- 142, 144, 146: Zuleitung
- 152: Ventilelement
- 154: Vakuumpumpe
- 155: Ableitung
- 156: Sammelbehälter
- A,B: Schwenkachse
- Lr: Längsrichtung, Reinraum
- U: unsterile Umgebung
- X: Achse
- Y: Richtung

## Patentansprüche

1. Vorrichtung zum Umformen von Kunststoffvorformlingen (10) zu Kunststoffbehältnissen (10a) mit einer Vielzahl von Blasstationen (8), welche an einem beweglichen Träger (2) angeordnet sind, wobei die Blasstationen (8) jeweils mindestens zwei Blasformteile aufweisende Blasformen (4) aufweisen, die in ihrem Inneren einen Hohlraum ausbilden, innerhalb dessen die Kunststoffvorformlinge (10) expandierbar sind und wobei die Blasstationen (8) jeweils Beaufschlagungseinrichtungen aufweisen, welche die Kunststoffvorformlinge (10) zu deren Expansion mit einem fließfähigen Medium beaufschlagen, wobei die Blasstationen einen Verriegelungsmechanismus (80) aufweisen, um die Blasformträger (6a, 6b) in einem geschlossenen Zustand miteinander zu verriegeln und dieser Verriegelungsmechanismus (80) ein erstes Verriegelungselement (82) aufweist, sowie ein zweites Verriegelungselement (84), welches gegenüber dem ersten Verriegelungselement (82) bewegbar ist,
**dadurch gekennzeichnet, dass**
die Blasformteile jeweils an Blasformträgern angeordnet sind,
die Blasformträger bezüglich einander zum Öffnen und Schließen der Blasform bewegbar sind, und
wenigstens eine erste Lagereinrichtung (60) zur beweglichen Lagerung der Blasformträger gegenüber einander und/oder wenigstens eine zweite Lagereinrichtung (70) zur beweglichen Lagerung des ersten Verriegelungselements (82) gegenüber dem zweiten Verriegelungselement (84) vorgesehen ist und wenigstens eine dieser Lagereinrichtungen (60, 70) als schmiermittelloses Gleitlager oder als Lager, welches zwischen relativ zueinander beweglichen Lagerteilen wenigstens teilweise mit einem Kunststoff ausgespritzt ist, ausgeführt ist.

2. Vorrichtung (1) nach Anspruch 1,
**dadurch gekennzeichnet, dass**
die Vorrichtung (1) einen Reinraum aufweist, innerhalb dessen die Blasstationen transportiert werden und dieser Reinraum (20) mit wenigstens einer Wandung gegenüber einer Umgebung abgetrennt ist.

3. Vorrichtung (1) nach Anspruch 1,
**dadurch gekennzeichnet, dass**
wenigstens ein Blasformträger (6a, 6b) bezüglich einer ersten vorgegebenen Schwenkachse (A) schwenkbar angeordnet ist und die erste Lagereinrichtung (60) zum Lagern dieser Schwenkbewegung dient.

4. Vorrichtung (1) nach Anspruch 1,
**dadurch gekennzeichnet, dass**
wenigstens ein Verriegelungselement (82, 84) bezüglich einer zweiten Schwenkachse (B) schwenkbar gelagert ist und die zweite Lagerungseinrichtung (70) zum Lagern dieser Schwenkbewegung bezüglich der zweiten Schenkachse (B) dient.

5. Vorrichtung (1) nach wenigstens einem der vorangegangenen Ansprüchen
**dadurch gekennzeichnet, dass**
wenigstens eine Lagereinrichtung (60, 70) an wenigstens einer Lagerfläche wenigstens eine Ausnehmung (62) aufweist.

6. Vorrichtung (1) nach Anspruch 5,
**dadurch gekennzeichnet, dass**
wenigstens eine Lagereinrichtung (60, 70) einen Kunststoff als Gleitlagerwerkstoff aufweist.

7. Vorrichtung (1) nach Anspruch 6,
**dadurch gekennzeichnet, dass**
wenigstens ein Werkstoff wenigstens einer Lagereinrichtung entweder aus einer Gruppe von Kunststoffen, insbesondere thermoplastischen oder duroplastischen Kunststoffen, ausgewählt ist, oder metallische Werkstoffe oder Kombinationen hieraus oder dergleichen enthält.

8. Vorrichtung (1) nach Anspruch 1,
**dadurch gekennzeichnet, dass**
in einem Kunststoff, welcher als Werkstoff für wenigstens eine Lagereinrichtung dient,
ein Schmierstoff für die Lagereinrichtung enthalten ist.

9. Vorrichtung (1) nach wenigstens einem der vorangegangenen Ansprüche,
**dadurch gekennzeichnet, dass**
wenigstens eine Lagereinrichtung als Radiallager und/oder als Axiallager dient.

10. Vorrichtung (1) nach wenigstens einem der vorangegangenen Ansprüche,
**dadurch gekennzeichnet, dass**
wenigstens eine Lagereinrichtung von einem fließfähigen Sterilisationsmittel durchströmbar ist.

## Claims

1. An apparatus for the shaping of plastics material preforms (10) into plastics material containers (10a) with a plurality of blow moulding stations (8) which are arranged on a movable carrier (2), wherein the blow moulding stations (8) have blow moulds (4) which in each case have at least two blow mould parts and which in their interior form a cavity inside which the plastics material preforms (10) are capable of being expanded, and wherein the blow moulding stations (8) have in each case stressing devices which act upon the plastics material preforms (10) in order to expand them with a flowable medium, wherein the blow moulding stations have a locking mechanism (80) in order to lock the blow mould carriers (6a, 6b) together in a closed state, and this locking mechanism (80) has a first locking element (82) and a second locking element (84) which is movable with respect to the first locking element (82),
**characterized in that**
the blow mould parts are arranged in each case on blow mould carriers and the blow mould carriers are movable with respect to one another in order to open and close the blow mould and
at least one first bearing device (60) is provided for the movable mounting of the blow mould carriers with respect to each other and/or at least one second bearing device (70) is provided for the movable mounting of the first locking element (82) with respect to the second locking element (84), and at least one of these bearing devices (60, 70) is designed in the form of a slide bearing without lubricant or in the form of a bearing which is injection moulded at least in part from a plastics material between bearing parts movable relative to each other.

2. An apparatus (1) according to claim 1,
**characterized in that**
the apparatus (1) has a clean room inside which the blow moulding stations are conveyed, and this clean room (20) is separated from the environment by at least one wall.

3. An apparatus (1) according to claim 1,
**characterized in that**
at least one blow mould carrier (6a, 6b) is arranged so as to be pivotable with respect to a first preset pivot axis (A) and the first bearing device (60) is used for supporting this pivoting movement.

4. An apparatus (1) according to claim 1,
**characterized in that**
at least one locking element (82, 84) is mounted so as to be pivotable with respect to a second pivot axis (B) and the second bearing device (70) is used for supporting this pivoting movement with respect to the second pivot axis (B).

5. An apparatus (1) according to at least one of the preceding claims,
**characterized in that**
at least one bearing device (60, 70) has at least one recess (62) on at least one bearing face.

6. An apparatus (1) according to claim 5,
**characterized in that**
at least one bearing device (60, 70) has a plastics material as the material of the slide bearing.

7. An apparatus (1) according to claim 6,
**characterized in that**
at least one material of at least one bearing device either is chosen from a group of plastics materials, in particular thermoplastic plastics materials or thermosetting plastics materials, or contains metallic materials or combinations thereof or the like.

8. An apparatus (1) according to claim 1,
**characterized in that**
a lubricant for the bearing device is contained in a plastics material which acts as a material for at least one bearing device.

9. An apparatus (1) according to at least one of the preceding claims,
**characterized in that**
at least one bearing device acts as a radial bearing and/or as an axial bearing.

10. An apparatus (1) according to at least one of the preceding claims,
**characterized in that**
at least one bearing device is capable of having a flowable sterilization agent flow through it.

## Revendications

1. Dispositif de formage par soufflage d'ébauches en matière plastique (10) en récipients en matière plastique (10a) avec une pluralité de postes de soufflage (8) qui sont agencés sur un support mobile (2), dans lequel les postes de soufflage (8) présentent des moules de soufflage (4) présentant respectivement au moins deux pièces de moule de soufflage qui réalisent en leur intérieur un espace creux dans lequel les ébauches en matière plastique (10) peuvent être expansées et dans lequel les postes de soufflage (8) présentent respectivement des dispositifs d'alimentation qui alimentent les ébauches en matière plastique (10) pour leur expansion en un produit coulant, dans lequel les postes de soufflage présentent un mécanisme de verrouillage (80) afin de verrouiller les supports de moule de soufflage (6a, 6b) dans un état fermé l'un avec l'autre et ce mécanisme de verrouillage (80) présente un premier élément de verrouillage (82) ainsi qu'un second élément de verrouillage (84) qui est mobile par rapport au premier élément de verrouillage (82),
**caractérisé en ce que**
les parties de moule de soufflage sont agencées respectivement sur des supports de moule de soufflage,
les supports de moule de soufflage sont mobiles les uns par rapport aux autres pour l'ouverture et la fermeture du moule de soufflage, et
au moins un premier dispositif de palier (60) pour le logement mobile des supports de moule de soufflage les uns par rapport aux autres et/ou au moins un second dispositif de palier (70) pour le logement mobile du premier élément de verrouillage (82) par rapport au second élément de verrouillage (84) est prévu et au moins un de ces dispositifs de palier (60, 70) est réalisé comme palier lisse sans moyen de lubrification ou comme palier qui est pulvérisé entre des parties de palier mobiles les unes par rapport aux autres au moins partiellement avec une matière plastique.

2. Dispositif (1) selon la revendication 1,
**caractérisé en ce que**
le dispositif (1) présente une salle blanche dans laquelle les postes de soufflage sont transportés et cette salle blanche (20) est séparée avec au moins une paroi par rapport à un environnement.

3. Dispositif (1) selon la revendication 1,
**caractérisé en ce que**
au moins un support de moule de soufflage (6a, 6b) est agencé de manière pivotante par rapport à un premier axe de pivotement prescrit (A) et le premier dispositif de palier (60) sert de logement à ce mouvement de pivotement.

4. Dispositif (1) selon la revendication 1,
**caractérisé en ce que**
au moins un élément de verrouillage (82, 84) est logé de manière pivotante par rapport à un second axe de pivotement (B) et le second dispositif de logement (70) sert au logement de ce mouvement de pivotement par rapport au second axe de pivotement (B).

5. Dispositif (1) selon au moins l'une des revendications précédentes,
**caractérisé en ce que**
au moins un dispositif de palier (60, 70) présente sur au moins une surface de palier au moins un évidement (62).

6. Dispositif (1) selon la revendication 5,
**caractérisé en ce que**
au moins un dispositif de palier (60, 70) présente une matière plastique comme matériau de palier lisse.

7. Dispositif (1) selon la revendication 6,
**caractérisé en ce que**
au moins un matériau d'au moins un dispositif de palier est sélectionné dans un groupe de matières plastiques, en particulier thermoplastiques ou thermodurcissables, ou contient des matériaux métalliques ou des combinaisons de ceux-ci ou similaires.

8. Dispositif (1) selon la revendication 1,
**caractérisé en ce que**
dans une matière plastique qui sert de matériau pour au moins un dispositif de palier un lubrifiant pour le dispositif de palier est contenu.

9. Dispositif (1) selon au moins l'une des revendications précédentes,
**caractérisé en ce que**
au moins un dispositif de palier sert de palier radial et/ou de palier axial.

10. Dispositif (1) selon au moins l'une des revendications précédentes,
**caractérisé en ce que**
au moins un dispositif de palier peut être traversé par un moyen de stérilisation coulant.
